# EUROPÄISCHE PATENTSCHRIFT

(11) **EP 1 518 903 B1**
(45) Veröffentlichungstag und Bekanntmachung des Hinweises auf die Patenterteilung: **13.06.2012**
(21) Anmeldenummer: 04019261.9
(22) Anmeldetag: 13.08.2004
(51) Int. Cl.: C09B 67/08, C09C 1/00

(54) **Verkapselte Pigmente**
Encapsulated pigments
Pigments encapsulés

(30) Priorität: 25.09.2003 DE 10344660
(43) Veröffentlichungstag der Anmeldung: 30.03.2005
(73) Patentinhaber: Merck Patent GmbH, 64293 Darmstadt (DE)
(72) Erfinder: Rathschlag, Thomas, 63762 Grossostheim (DE); Hochstein, Veronika, 76646 Bruchsal (DE); Griessmann, Carsten, 64846 Gross-Zimmern (DE); Schoen, Sabine, Dr., 45701 Herten (DE)

(56) Entgegenhaltungen:
- EP-A1- 0 256 418
- EP-B2- 0 803 552
- DE-A- 2 200 322
- US-A- 4 295 850
- US-A- 4 525 170
- US-A- 4 624 678
- US-A- 4 961 755
- US-A- 5 681 876

## Beschreibung

Die vorliegende Erfindung betrifft verkapselte Pigmente bestehend aus einer äußeren wasserlöslichen Hülle und einem Kern aus organischen und/oder anorganischen Pigmenten und gegebenenfalls üblichen Additiven. Derartige Pigmente zeichnen sich durch ihre sehr guten Auflösegeschwindigkeiten in wässrigen Systemen aus und sind daher insbesondere für Farben, Lacke, Druckfarben auf Wasserbasis, bei der Papierherstellung und bei der Pigmentierung von wasserhaltigen kosmetischen Formulierungen geeignet.

Die aus dem Stand der Technik bekannten Granulate und Pigmentpräparationen/Pigmentkompositionen, wie z.B. bekannt aus DE 22 00 322, U.S. 4,961,755, U.S. 5,681,876, U.S. 4,624,678, EP 0 803 552 B2, EP 0 256 418 A1, enthaltend Pigmente und Bindemittel besitzen in der Regel den Nachteil, dass sie sich in wässrigen Systemen vergleichsweise schwer auflösen, bzw. Schwierigkeiten zeigen beim Dispergieren. Für die Homogenisierung von beispielsweise Effektpigmenten auf Basis plättchenförmiger Substrate aus dem Granulat in der herzustellenden Formulierung werden mechanische Kräfte benötigt, die wiederum die Plättchen der Effektpigmente zerstören können, was wiederum die optischen Eigenschaften der Pigmente nachteilig beeinflusst.

Aufgabe der vorliegenden Erfindung ist es Pigmentzubereitungen in Form von festen Teilchenformen bereit zustellen, die die oben genannten Nachteile nicht aufweisen und eine deutlich höhere Auflösegeschwindigkeit in wässrigen Bindemittelsystemen aufweisen als die Granulate aus dem Stand der Technik.

Überraschenderweise wurde gefunden, dass die Homogenisierung von Pigmenten in wäßrigen Anwendungssystemen, wie z.B. in Druckfarben, Lacken oder in kosmetischen Formulierungen, deutlich erhöht werden kann, wenn die Pigmente mit einem wasserlöslichen Film verkapselt sind.

Gegenstand der Erfindung sind daher verkapselte Pigmente, gemäß Anspruch 1, bestehend aus einer äußeren wasserlöslichen Hülle und einem Kern aus organischen oder anorganischen Pigmenten und optional Lösemittel und/oder üblichen Additiven.

Die erfindungsgemäßen verkapselten Pigmente zeichnen sich dadurch aus, dass die Hülle sich in der Regel innerhalb einer Minute auflöst und die Pigmente frei vorliegen und sich leicht in das Bindemittelsystem verteilen lassen, wodurch die spätere Homogenisierung der herzu-stellenden Formulierung erleichtert wird, da geringere mechanische Kräfte zur Auflösung der verkapselten Pigmente notwendig sind.

Die erfindungsgemäßen verkapselten Pigmente sind nicht staubend, gut rieselfähig, lassen sich im Vergleich zu den Granulaten aus dem Stand der Technik deutlich schneller in kommerziell erhältliche wässrige Bindemittelsysteme einarbeiten und sind dort kompatibel. Insbesondere sind die Produkte sowohl kompatibel mit wässrigen Druckfarben- und Lacksystemen, sowie in kosmetischen Formulierungen auf Wasserbasis und bei der Papierherstellung. Die über das Granulat hergestellten Farben und Lacke sind geeignet für alle wäßrigen Druckfarben, z.B. für den Tiefdruck, Flexodruck, Siebdruck, Offsetüberdrucklack (Offset Coating) sowie für die verschiedenen wäßrigen Lacksysteme aus dem Industrielack- und Automobillacksektor. Auch für Kunststoffeinfärbungen in bioabbaubaren Folien kommen sie in Betracht.

Die erfindungsgemäßen verkapselten Pigmente enthalten ≥ 80 Gew.%, vorzugsweise ≥ 90 Gew.%, insbesondere ≥ 95 Gew.%, an Pigmenten. Ganz besonders bevorzugt sind verkapselte Pigmente mit einem Gehalt an Pigmenten von mehr als 95 Gew.%. Die Gew.%-Angaben beziehen sich immer auf das verkapselte Pigment. Das Verhältnis Hülle/Kern beträgt vorzugsweise 50 : 50 bis 0,5 : 99,5, insbesondere 10 : 90 bis 5 : 95.

Als zwingend notwendige Komponente enthalten die erfindungsgemäßen verkapselten Pigmente einen wasserlöslichen Filmbildner für die Verkapselung. Geeignete Filmbildner sind beispielsweise wasserlösliche Harze bzw. Harzgemische, Cellulose und Cellulosederivate, wie z. B., Alkylcellulose, Hydroxycellulose, Hydroxyalkylcellulose, Celluloseacetobutryrat (wasserdispergierbare Form), Cellulosenitrat (wasserdispergierbare Form), Zucker, Sorbit, Stärke, Alginate und/oder Chitosan. Die verkapselten Pigmente besitzen eine äußere Hülle mit Filmdicken von 0,01-1 mm, vorzugsweise von 0,01-0,5 mm und insbesondere von 0,01-0,1 mm.

Bevorzugt beträgt die Säurezahl des Filmbildners auf Basis eines wasserlöslichen Harzes bzw. Harzgemisches 90 bis 350 mg KOH/g, insbesondere 120 bis 280 KOH/g, und ganz besonders bevorzugt 150 bis 270 KOH/g.

Nachfolgend werden einige Kennwerte geeigneter wasserlöslicher Harze genannt:
Polyvinylalkohole
Ester-Wert nach DIN 53401 in mg KOH/g = 1-250
Hydrolysegrad in mol-% = 80-100
Viscosität nach DIN 53015 in mPas = 2-60
Verbleibender Acetyl-Anteil = 0,1-20
Asche-Gehalt in %, kalkuliert als Na₂O = 0,5-1
Polyvinylpyrrolidone (PVP)
K-Werte = 15-103
Asche-Gehalt in % = <0,02
Molekular-Gewicht (GPC):
Mw/kdaltons = 7-2000
Relative Viscosität gemessen im Kapillarviscosimeter = 1,08-16,2
(1 %ig in Wasser, 23 °C)
Glasübergangstemperatur °C/DSC = 110-180
Copolymer von Polyvinylpyrrolidon mit Vinylacetat
Zusammensetzung Vinylpyrrolidon: Vinylacetat: 30 : 70 - 70 : 30
K-Werte = 20-40
Na-Carboxymethylcellulose
Viskosität (2%ige Lösung in Wasser, gemessen mittels Brookfield-LVT-Viskosimeter in mPas) = 2-100.000
Mikrokristalline Cellulose
Durchschnittliche Teilchengröße: 50-180 µm

Alle dem Fachmann bekannten natürlichen, halbsynthetischen und vollsynthetischen wasserlöslichen filmbildenden Harze bzw. Harzgemische, in denen organische oder anorganische Pigmente üblicherweise eingesetzt werden, kommen in Frage. Besonders bevorzugte Harze sind Polyvinylalkohol (PVA), Polyvinylpyrrolidon (PVP), Copolymere von Polyvinylpyrrolidon mit Vinylacetat, mikrokristalline Cellulose, Natrium-Carboxymethylcellulose (Na-CMC).

Besonders bevorzugt ist Polyvinylalkohol aufgrund seiner sehr guten Auflösegeschwindigkeit. Geeignete Harze sind z.B. kommerziell erhältlich von der Fa. Kuraray unter den Marken Mowiol.

Der Kern der verkapselten Pigmente besteht aus organischen und/oder anorganischen Pigmenten und optional Additiven, Lösemittel und Bindemitteln.

Geeignete anorganische Pigmente sind insbesondere Effektpigmente, SiO₂-Pigmente und TiO₂-Pigmente.

Als Effektpigmente werden hier Perlglanzpigmente, Metalleffektpigmente, Mehrschichtpigmente, holographische Pigmente, beschichtete oder unbeschichtete BiOCI-Plättchen und LCP-Pigmente (Liquid Crystal Polymer) verstanden. Die BiOCI-Pigmente können auch in Form von Anteigungen eingesetzt werden.

Insbesondere bevorzugt sind verkapselte Pigmente enthaltend Perlglanzpigmente auf der Basis plättchenförmiger, transparenter oder semitransparenter Substrate. Geeignete Substrate sind beispielsweise Schichtsilikate, wie etwa natürlicher und synthetischer Glimmer oder andere silikatische Materialien, Talkum, Sericit, Kaolin, sowie SiO₂-, Glas-, TiO₂-, Graphit- oder Al₂O₃-Plättchen. Die plättchenförmigen Substrate sind beispielsweise mit seltenen Erdmetallsulfiden, wie z. B. Ce₂S₃, Titansuboxiden, Titanoxinitriden, Pseudobrookit, mit farbigen oder farblosen Metalloxiden, wie z. B. TiO₂ (Rutil oder Anatas), Fe₂O₃, Fe₃O₄, SnO₂, ZrO₂, SiO₂, Al₂O₃, Cr₂O₃, ZnO, CuO, NiO, Ce₂O₃, und anderen Metalloxiden allein oder in Mischung in einer einheitlichen Schicht oder in aufeinanderfolgenden Schichten (Mehrschichtpigmente) belegt.

Perlglanzpigmente sind z.B. aus den deutschen Patenten und Patentanmeldungen 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 und P 38 42 330 bekannt und im Handel erhältlich, z.B. unter den Marken Iriodin®, Afflair®, Xirona® der Fa. Merck KGaA, Darmstadt, Deutschland. Mehrschichtpigmente auf Basis von Glimmer werden z.B. von der Fa. Merck KGaA, der Fa. EM Industries oder der Fa. Rona unter den Marken Timiron^{®} Splendid Copper, Timiron^{®} Splendid Gold, Timiron^{®} Splendid Green, Timiron^{®} Splendid Violet, Timiron^{®} Splendid Blue, Timiron^{®} Splendid Red, Iriodin^{®} Solargold, Dichrona^{®} Splendid BY, Dichrona^{®} Splendid BR, Xirona^{®} Caribbean Blue, vertrieben. Besonders bevorzugt sind Mehrschichtpigmente mit einer TiO₂-SiO₂-TiO₂-Schichtenfolge. Die Mehrschichtpigmente können optional noch auf der Oberfläche ein Farbmittel, wie z.B. Berliner Blau, Carminrot, Eisenoxid oder Chromgrün, aufweisen.

Besonders bevorzugte verkapselte Pigmente enthalten mit TiO₂, Fe₂O₃ oder TiOᵢFe₂O₃ beschichtete Glimmer-, Glas-, Al₂O₃-, Fe₂O₃ oder SiO₂-Plättchen. Die Beschichtung der SiO₂-Plättchen kann z. B. erfolgen wie in der WO 93/08237 (nasschemische Beschichtung) oder DE-OS 196 14 637 (CVD-Verfahren) beschrieben. Al₂O₃-Plättchen sind beispielsweise aus der EP 0 763 573 A1 bekannt. Plättchenförmige Substrate, die mit ein oder mehreren seltenen Erdmetallsulfiden belegt sind, werden z. B. in der DE-A 198 10 317 offenbart. Ein- oder mehrfach beschichtete Pigmente auf Basis von Glasplättchen sind beispielsweise aus den Patentanmeldungen WO 03/006558 A2, WO 02/090448 A2 und WO 2004/055119 A1 bekannt.

Weiterhin geeignet sind Metalleffektpigmente, insbesondere für wässrige und lösemittelhaltige Systeme modifizierte Aluminiumplättchen, wie sie von der Fa. Eckart unter der Marke Rotovario Aqua^{®} oder Stapa Hydroxal^{®} für wässrige Anwendungen vertrieben werden, sowie Variocrom^{®}-, Paliocrom^{®}-Pigmente und Sicopearl Fantastico-Pigmente der Fa. BASF, insbesondere auch solche aus den Offenlegungsschriften EP 0 681 009 A1, EP 0 632 110 A1, EP 0634 458 A1, sowie LCP-Pigmente (Liquid Crystal Polymers). Geeignete Effektpigmente der Fa. BASF sind z.B. Variocrom ED 1478, Variocrom ED 1479, Variocrom ED 1480. Weiterhin geeignet sind ebenfalls alle dem Fachmann bekannten holographischen Pigmente sowie plättchenförmigen Pigmente, die Metallschichten aufweisen. Derartige Pigmente werden unter anderem von der Fa. Flex, z.B. unter den Marken Chromaflair^{®} Red/Gold 000, Chromaflair^{®} Gold/Silver 080, Chromaflair^{®} Green/Purple 190, Chromaflair^{®} Silver/Green 060, vertrieben. Die Chromaflair^{®}-Pigmente mit einer Partikelgröße von ca. 11-13 µm bestehen aus einem deckenden Aluminium-Kern und einer in der Schichtstärke variierenden Magnesiumfluorid-Schicht, die die spätere Interferenzfarbe des zu erzielenden Pigmentes erzeugt. Als äußerste Schicht ist noch eine halbdurchlässige Chromschicht aufgebracht.

Weiterhin geeignete Interferenzpigmente bestehend aus Glimmer und Titandioxid sind z.B. Flamenco^{®} Summit Colors, der Firma Engelhard mit einer Partikelgröße von 6 - 48 µm, sowie Reflecks™ Pearlescent und Irisdescent Pigments mit einer Partikelgröße von 4 -190 µm bestehend aus Borosilikat und Titandioxid und/oder Eisenoxid.

Geeignete Silber- und Interferenzpigmente basierend auf Glimmer und Titandioxid und/oder Eisenoxid in unterschiedlichen Partikelgrößen werden unter dem Namen Prestige^{®} von der Firma Eckart vertrieben. Weiterhin geeignet sind Metallic Pigmente für kosmetische Zwecke der Firma Eckart, welche unter der Marke Visionaire^{®} vertrieben werden. Sie bestehen aus Aluminium-, Bronze- oder Kupferpuder, welche mit Siliziumdioxid verkapselt sind und in Partikelgrößen d₅₀ = 17, 20 oder 35 µm erhältlich sind.

Die erfindungsgemäßen verkapselten Pigmente können ein oder mehrere Pigmente enthalten. Vielfach können durch die Verwendung von mindestens zwei verschiedenen Effektpigmenten besondere Farb- und Glanzeffekte erzielt werden. Bevorzugte verkapselte Pigmente bestehen aus einem Pigmentgemisch und enthalten ein oder zwei, ferner drei Effektpigmente, insbesondere solche auf Basis von Glimmer-, Glas-, Al₂O₃-, Fe₂O₃- und/oder SiO₂-Plättchen. Weiterhin bevorzugt sind Pigmentgemische, die auf unterschiedlichen Partikelgrößen beruhen, z.B. Mischungen von Glimmerplättchen aus von N-Fraktion (10-60 µm) und F-Fraktion (5-25 µm), die mit ein oder mehreren Metalloxiden beschichtet sind. Weiterhin sind Abmischungen der Effektpigmente mit organischen und anorganischen Pigmenten bis zu 10 Gew.% bezogen auf das verkapselte Pigment möglich, wobei die Gesamtmenge an Pigment 95 Gew.%, bezogen auf das verkapselte Pigment, nicht übersteigen sollte. Durch die Abmischung können ganz gezielt Farbflops eingestellt werden. Insbesondere führt die Zugabe von ein oder mehreren Farbstoffen und/oder organischen Pigmenten in angeriebener Form zu speziellen Farbeffekten. Weiterhin können solche Substanzen und Partikel (tracer) zugesetzt werden, die eine Produkt-identifizierung ermöglichen.

Die erfindungsgemäßen verkapselten Pigmente enthalten Lösemittel bzw. Lösemittelgemische, in der Regel 1,5-7,5 Gew.%, insbesondere 3,0-7,5 Gew.% und ganz besonders bevorzugt 3,0-5,0 Gew.%, Lösemittel bezogen auf das verkapselte Pigment. Die Lösemittelkomponente im verkapselten Pigment muss auf das verwendete Harzsystem jeweils sachgemäß abgestimmt werden. Bei der Herstellung können Wasser sowie alle mit Wasser mischbaren organischen nichtflüchtigen Lösemittel eingesetzt werden. Geeignete Lösemittel sind z. B. Wasser, Glykolether, wie z.B. Propylenglycolmonoethylether, Propylenglycolmonoethylether oder Diole, wie z.B. Ethylenglykol und Propylenglykol oder Polyetherdiole, aliphathische Triole und Tetrole mit 2 bis 6 Kohlenstoffatomen, wie Trimethylolethan, Trimethylolpropan, Glycerin, 1,2,4-Butantriol, 1,2,6-Hexantriol, Alkohole, Ketone, Ester, sowie alle anderen Lösemittel anderer Verbindungsklassen oder ein Gemisch aus zwei oder drei der vorgenannten Lösemittel.

Besonders bevorzugt sind Lösemittel mit einem Siedepunkt > 35 °C, insbesondere > 70 °C. Vorzugsweise werden solche Lösemittel eingesetzt, die mittel- oder hochviskos sind. Von Bedeutung ist, dass die Lösemittelkomponente bei der Herstellung mindestens ein Lösemittel bzw. Lösemittelgemisch enthält, welches einen Dampfdruck bei 20 °C von 0,001 bis 40 hPa, vorzugsweise 0,001 bis 30 hPa hat.

Besonders bevorzugte Lösemittel sind Wasser, Polyalkylenglykol, Glykolether, Diole, aliphatische Triole mit 2-6 Kohlenstoffatomen, Glycerin, 1,2,4-Butantriol, 1,2,6-Hexantriol oder ein Gemisch aus zwei oder drei der genannten Lösemittel. Die Dampfdrucke der geeigneten Lösemittel kann der Fachmann leicht ermitteln bzw. nachlesen im Handbook of Chemistry and Physics, 71st Edition 1990-1991, David R. Lide, CRC-Press, Kapitel 6-48.

Insbesondere bevorzugt sind Polyalkylenglykole, 1,2-Ethandiol (0,053 hPa), 1,2,3-Hexantriol (0,01 hPa), 1,2,3-Propantriol (0,001 hPa), sowie Wasser (23 hPa). In dem Wasser kann auch Sorbit und/oder Harnstoff gelöst sein. Bevorzugte Polyalkylenglykole sind Polyethylenglykol (0,1 hPa) und Ethylenglykolmonobutylether (0,8 hPa) (Dampfdrücke bei 20 °C jeweils in Klammern angegeben aus Handbook of Chemistry and Physics).

Die verkapselten Pigmente können sowohl im Kern als auch in der äußeren Hülle neben dem Pigment und dem Filmbildner übliche Additive enthalten, wie z.B., Neutralisationsmittel, Entschäumer, Netzmittel, UV-Stabilisatoren, Konservierungsmittel, Antiabsetzmittel, Verlaufsmittel, Emulgatoren, Sikkative oder Thixotropiermittel. Es handelt sich hierbei um in der Lack-, Druckindustrie, bzw. bei kosmetischen Formulierungen üblichen Hilfsstoffe, die in den erfindungsgemäßen verkapselten Pigmenten in einer Menge von 0 bis 10 Gew.% enthalten sein können. Insbesondere sind hier genannt Succinatderivate, z.B. solche wie sie von der Fa. Henkel unter der Marke Hydropalat 875 vertrieben werden.

Sofern die verkapselten Pigmente als zusätzliche Komponente ein Neutralisationsmittel enthalten, handelt es sich hier insbesondere um die auf dem Lacksektor üblichen Basen, wie z.B. Harnstoff, Harnstoffderivate, Ammoniak, Aminoalkohole, wie z.B. 2-Amino-2-methyl-1-propanol, Alkalihydroxide, wie z.B. KOH oder NaOH, Amine, wobei es sich bevorzugt bei verkapselten Pigmenten für wässrige Anwendungen um nichtflüchtige organische niedermolekulare Amine handelt bzw. um solche, die bei Raumtemperatur eine geringe Flüchtigkeit besitzen.

In der Regel enthält das erfindungsgemäße verkapselte Pigment 0,05 bis 10 Gew.% eines Neutralisationsmittels, vorzugsweise 1 bis 7 Gew.%, insbesondere 1,5 bis 5 Gew.%, bezogen auf das verkapselte Pigment.

Die erfindungsgemäßen verkapselten Pigmente können weiterhin in Mengen von 0,05 bis 10 Gew.%, vorzugsweise 0,05 bis 6 Gew.%, insbesondere 0,05 bis 3 Gew.%, als weitere Komponente ein Modifiziermittel enthalten. Insbesondere wird als Modifiziermittel ein Polyalkylenoxid bzw. Polyalkylenoxid-Derivat eingesetzt um die Festigkeit der verkapselten Pigmente sowie die Kompatibilität zu verbessern.

Falls erforderlich wird durch Zusatz eines Redispergiermittels in Form von sperrigen Teilchen, wie z.B. Fasern oder sphärischen Partikeln, verhindert, dass die Effektpigmente auf Basis plättchenförmiger Substrate sich auf Grund der sterischen Abstoßung in nennenswertem Umfang aufeinanderlegen und damit eine starke Adhäsion ausüben. Dies bewirkt, dass die erfindungsgemäßen verkapselten Pigmente stabiler sind, und sich die verkapselten Pigmente nach dem Eintrag in das Lack-, Druckfarben- oder Farbsystem bzw. in die kosmetische Formulierung zum Teil sehr viel langsamer absetzen und das Sediment aber in allen Fällen weniger hart ist, und dass keine Probleme beim Wiederaufrühren des Bodensatzes auftreten.

Das Redispergiermittel wird vorzugsweise in Mengen von 0 bis 5 Gew.%, insbesondere von 0,05 bis 3 Gew.%, bezogen auf das Granulat eingesetzt. Alle dem Fachmann bekannten organischen und anorganischen Fasern mit einer Faserlänge von 0,1-20 µm können verwendet werden. Geeignete Partikel sind insbesondere alle Kunstfasern, z.B. aus Polyethylen, Polyacrylaten, Polypropylen, Polyamiden, Cellulosefasern, anorganische Fasern, hier bevorzugt Siliziumverbindungen, Glasfasern sowie insbesondere die Kondensationsprodukte aus modifizierten Isocyanaten und Mono- und Diaminen. Diese Kondensationsprodukte, wobei es sich um Diharnstoffderivate sowie Aminoharnstoffe mit Urethangruppierungen handelt, sind als Thixotropierungsmittel bekannt und werden mit einem Bindemittel Farben und Lacken zugesetzt, um die Ablaufeigenschaften und die Streichbarkeit zu verbessern.

Weiterhin können als Redispergiermittel alle dem Fachmann bekannten Diharnstoffderivate und Urethanverbindungen verwendet werden, wie sie z.B. in der EP 0 198 519 und in Organic Coatings: Science and Technology, A. Heenriga, P.J.G. von Hemsbergen, S. 201-222, New York 1983 beschrieben werden.

Geeignete sphärische Materialien sind insbesondere Glas-, Wachs- oder Polymerhohlkugeln aus Vinylharzen, Nylon, Silikon, Epoxyharzen, Olefinharzen, Polystyrolen sowie anorganische Materialien, wie z.B. TiO₂, SiO₂ oder ZrO₂. Vorzugsweise werden Hohlkugeln, ferner auch Vollkugeln, mit einer Teilchengröße von 0,05 bis 150 µm verwendet. Insbesondere bevorzugt werden in den erfindungsgemäßen verkapselten Pigmenten Glas-, Wachs- oder Polymerhohlkugeln eingesetzt.

Sphärische Teilchen auf Basis von SiO₂ in einem Teilchenbereich von 3-10 µm sind z.B. als Materialien für die Hochdruckflüssigkeitschromatographie bekannt und werden z.B. als LiChrospher^{®} von der Fa. Merck KGaA, Darmstadt, BRD, vertrieben. Vorzugsweise werden solche Materialien in monodisperser Form, d.h. mit einer möglichst einheitlichen Teilchengröße, eingesetzt. Bekannt sind solche monodispersen sphärischen Teilchen auf Basis von SiO₂, TiO₂ und ZrO₂. Monodisperses SiO₂ kann beispielsweise nach der EP 0 216 278 B1 hergestellt werden. Glashohlkugeln werden beispielsweise unter dem Handelsnamen Q-CEL von der Fa. PQ Corporation, USA oder Scotchlite von der Fa. 3M, Frankfurt, Deutschland, vertrieben.

Zusätzlich können die erfindungsgemäßen verkapselten Pigmente oberflächenaktive Substanzen enthalten, wie z.B. Alkylsilane, die auch eine weitere funktionelle Gruppe enthalten können, ungesättigte oder gesättigte Fettsäuren oder Fluortenside. Insbesondere bevorzugt werden Silanverbindungen der Formel (CₙH₂ₙ₊₁)Si(OCₘH₂ₘ₊₁)₃, worin n 1-30 und m 1-10 bedeutet, als oberflächenaktive Substanzen eingesetzt. Geeignete Silanverbindungen sind beispielsweise n-Hexyldecyltriethoxysilan und n-Octyl-decyltriethoxysilan (Si 116 bzw. Si 118 der Degussa AG, Frankfurt) sowie die entsprechenden Fluoralkylsilane.

Ferner können als oberflächenaktive Substanzen die gesättigten und ungesättigten Fettsäuren, wie z.B. Capronsäure, Caprylsäure, Caprinsäure, Laurinsäure, Myristinsäure, Palmitinsäure, Stearinsäure, Ölsäure, Linolsäure sowie Fettsäuregemische eingesetzt werden.

Bei dem oberflächenaktiven Reagenz kann es sich auch um ein Gemisch aus Silan, Fettsäuren und/oder Tensiden handeln. Die verkapselten Pigmente können 0,1 bis 5 Gew.%, vorzugsweise 0,2 bis 3 Gew.% und insbesondere 0,5 bis 2 Gew.%, an oberflächenaktiven Substanzen bezogen auf das verkapselte Pigment enthalten.

Verkapselte Titandioxidpigmente enthalten vorzugsweise im Filmbildner UV A/B-Schutzfilter, wie z.B. Phenylbenzidimidazol-5-sulfonsäure (Eusolex^{®} 232), Benzophenone-5-Natriumsalz (Uvinul MS 40 (BASF)), Terephthalylidene Dicamphor Sulfonic Acid (Mexoryl SX (Chimex), Benzylidene Camphor Sulfonic Acid (Mexoryl SL (Chimex), Disodium Phenyl Dibenzimidazole Tetrasulfonate (Neoheliopan AP (Symrise) sowie wässrige Titandioxid-Dispersionen (Eusolex^{®} T-aqua)

Bei der Herstellung der verkapselten Pigmente werden die Pigmente, der Filmbildner, die Additive sofern vorhanden, gegebenenfalls unter Zugabe eines Lösemittels, vorzugsweise Wasser, gemischt. Dabei liegt der Anteil an Lösemittel zu Beginn der Herstellung zwischen 20-40 Gew.%, bevorzugt zwischen 25-35 Gew.%. Vorzugsweise werden bei der Herstellung der verkapselten Pigmente der Filmbildner sowie gegebenenfalls weitere Additive mit dem Lösemittel vorgemischt, bevor sie dem Pigment zugesetzt werden. Dadurch ist ein intensiver Kontakt zwischen Pigment und Filmbildner erforderlich um eine gleichmäßigere Belegung der Pigmentoberfläche zu gewährleisten. Anschließend wird diese Mischung schonend homogenisiert.

Vorzugsweise wird das Pigment vorgelegt und zunächst unter Rühren mit dem Lösemittel enthaltend den Filmbildner und gegebenenfalls bereits das Modifiziermittel, angeteigt; anschließend erfolgt die Zugabe einer weiteren Lösung bestehend aus Lösemittel und Additiven.

Zur Herstellung der verkapselten Pigmente wird die feuchte Pigmentpräparation stranggepresst oder auf anderen dem Fachmann bekannten Wegen in eine kompakte Teilchenform verdichtet, z. B. durch Tablettieren, Brikettieren, Pelletieren, Granulieren, Sprühgranulieren, Wirbelbettgranulieren oder Extrudieren, und anschließend unter genau kontrollierten Bedingungen getrocknet. Während des Trocknungsvorgangs wird kontinuierlich der Lösemittelgehalt des Granulats bestimmt. Der Trocknungsprozess findet bei Temperaturen von 80 bis 130 °C statt, vorzugsweise bei 100 bis 120°C statt, und kann ggf. unter reduziertem Druck, vorzugsweise bei 80-100 mbar, erfolgen. Hierbei wird der Filmbildner, wie z.B. Polyvinylalkohol, durch gezielte Temperatureinwirkung verfilmt. Die Dauer der Trocknung hängt von der Chargengröße der zu trocknenden Präparation, dessen Durchsatz während der Trocknung und vom verwendeten Lösemittel ab, beträgt aber in der Regel 0,5 - 24 h, vorzugsweise 1 - 18 h. Zuletzt wird das verkapselte Pigment gegebenenfalls klassiert.

Unter dem Begriff "verkapselte Pigmente" sind hier alle möglichen festen Teilchenformen, wie z.B. Granulate, Pellets, Chips, Briketts, Tabletten, Würstchen, etc., zu verstehen. Die Teilchengrößen der verkapselten Pigmente liegen im Bereich von 0,1 bis 150 mm, vorzugsweise 0,1 bis 20 mm, insbesondere 0,1 bis 6 mm.

Sofern die verkapselten Pigmente eine Restfeuchte aufweisen sollen, erfolgt die Bestimmung des Lösemittelgehalts bei der Herstellung, indem man mit einem auf Infrarotbasis arbeitenden Moisture Analyzer, Typ MA 30 der Fa. Sartorius die Restfeuchte bestimmt. Dabei wird nach vorhergehender Kalibrierung der Wassergehalt bestimmt. Falls weitere "Solubility-Enhancer" bestimmt werden sollen, geschieht dies nach dem Prinzip der Differenzwägung, da die zu analysierenden Stoffe ab der vorher kalibrierten Temperatur gemeinsam mit dem Wasser ausgetrieben werden können. Es verbleibt nur noch der Anteil an polymerer Substanz/Harz und das Effektpigment.

Bei der Bestimmung des Wassergehaltes mit dem Moisture Analyzer, Typ MA 30 der Fa. Sartorius, können folgende Parameter zur Ergebnisfindung gewählt werden:

| | |
|---|---|
| Einwaage: | 4-5 g ungemahlene Prüfsubstanz |
| Temperatur: | 135-160 °C |
| Zeiteinstellung: | 12-20 Minuten |
| Ergebnisanzeige: | 0-100 % (Lösemittelgehalt). |

Die erfindungsgemäßen verkapselten Pigmente können für vielfältige Anwendungen verwendet werden. Bevorzugt werden sie in wäßrigen Beschichtungssystemen aus den Bereichen Druck, insbesondere Überdrucklackierung, Offsetüberdrucklackierung, Tiefdruck, Flexodruck und Siebdruck, eingesetzt. Besonders bevorzugt werden die verkapselten Pigmente als Vorprodukte für Beschichtungsmassen auf beliebige Substratmaterialien, beispielsweise Metalle wie Eisen, Stahl, Aluminium, Kupfer, Bronze, Kunststoff, Messing sowie Metallfolien aber auch Glas, Keramik und Beton, als auch auf Holz, z.B. Möbel, Ton, Textil, Papier, Verpackungsmaterialien, z.B. Kunststoffbehälter, Folien oder Pappen, oder auf anderen Materialien zu dekorativen und/oder schützenden Zwecken aufgebracht. Weiterhin geeignet sind die erfindungsgemäßen verkapselten Pigmente in Formulierungen für die Erzeugung von Sicherheitsmerkmalen.

Die verkapselten Pigmente sind aufgrund ihrer guten Homogenisierung insbesondere geeignet für kosmetische Formulierungen, sowohl im Bereich der dekorativen Kosemetik als auch für Personal Care Produkte. Bei der Verwendung von verkapselten Pigmenten mit Effektpigmenten lassen sich mit ihnen besonders wirksame Effekte in den verschiedenen wäßrigen Anwendungsmedien erzielen, z.B. in kosmetischen Formulierungen wie z.B. Duschgel, Make-up, Gelprodukte, Lotionen, Shampoos, Emulsionen.

Selbstverständlich können die erfindungsgemäßen verkapselten Pigmente in den Formulierungen auch mit jeder Art von kosmetischen Roh- und Hilfsstoffen kombiniert werden. Dazu gehören u.a. Öle, Fette, Wachse, Filmbildner, Konservierungsmittel, wie z.B. Methylparaben und allgemein anwendungstechnische Eigenschaften bestimmende Hilfsstoffe, wie z.B. Verdicker und rheologische Zusatzstoffe, wie z.B. Bentonite, Hektorite, Siliciumdioxide, Ca-Silicate, Gelatine, hochmolekulare Kohlenhydrate und/oder oberflächenaktive Hilfsmittel, etc.

Die die erfindungsgemäßen Pigmente enthaltenden Formulierungen können dem lipophilen, hydrophilen oder hydrophoben Typ angehören. Bei heterogenen Formulierungen mit diskreten wäßrigen und nicht-wässrigen Phasen können die erfindungsgemäßen verkapselten Pigmente in jeweils nur einer der beiden Phasen enthalten oder auch über beide Phasen verteilt sein.

Die pH-Werte der Formulierungen können zwischen 1 und 14, bevorzugt zwischen 2 und 11 und besonders bevorzugt zwischen 5 und 8 liegen.

Den Konzentrationen der erfindungsgemäßen verkapselten Pigmente in der Formulierung sind keine Grenzen gesetzt. Sie können - je nach Anwendungsfall - zwischen 0,001 (rinse-off-Produkte, z.B. Duschgele) - 100 % (z.B. Glanzeffekt-Artikel für besondere Anwendungen) liegen.

Die erfindungsgemäßen verkapselten Pigmente können weiterhin auch mit kosmetischen Wirkstoffen kombiniert werden.

Geeignete Wirkstoffe sind z.B. Insect Repellents, anorganische UV-Filter, wie z.B. TiO₂, UV A/B/C-Schutzfilter (z.B. OMC, B3, MBC), auch in verkapselter Form, Anti-Ageing-Wirkstoffe, Vitamine und deren Derivate (z.B. Vitamin A, C, E, etc.), Selbstbräuner (z.B. DHA, Erytrolyse u.a.) sowie weitere kosmetische Wirkstoffe, wie z.B. Bisabolol, LPO, VTA, Ectoin, Emblica, Allantoin, Bioflavanoide und deren Derivate

Organische UV-Filter werden in der Regel in einer Menge von 0,5 bis 10 Gewichtsprozent, vorzugsweise 1 - 8 %, anorganische Filter von 0,1 bis 30 % in kosmetische Formulierungen eingearbeitet.

Die erfindungsgemäßen Zubereitungen können darüber hinaus weitere übliche hydratisierende und/oder hautpflegende wirksame Substanzen enthalten, wie z.B. Aloe Vera, Avokadoöl, Coenzym Q10, Grüner Tee Extrakt oder Wirkstoffkomplexe. Besonders bevorzugte Wirkstoffe sind Pyrimidincarbonsäuren und/oder Aryloxime. Unter den kosmetischen Anwendungen ist insbesondere die Verwendung von Ectoin und Ectoin-Derivaten zur Pflege von gealterter, trockener oder gereizter Haut zu nennen.

Als geeigente Anwendungsform der kosmetischen Formulierungen seien insbesondere genannt: Lösungen, Suspensionen, Emulsionen, PIT-Emulsionen, Pasten, Salben, Gele, Cremes, Lotionen, tensidhaltige Reinigungspräparate, Aerosole und Sprays. Weitere Anwendungsformen sind z.B. Shampoos und Duschbäder. Der Zubereitung können beliebige übliche Trägerstoffe, Hilfsstoffe und gegebenenfalls weitere Wirkstoffe zugesetzt werden.

Salben, Pasten, Cremes und Gele können die üblichen Trägerstoffe enthalten, z.B. tierische und pflanzliche Fette, Wachse, Paraffine, Stärke, Traganth, Cellulosederivate, Polyethylenglykole, Silicone, Bentonite, Kieselsäure, Talkum und Zinkoxid oder Gemische dieser Stoffe.

Sprays können die üblichen Trägerstoffe enthalten, z.B. Milchzucker, Talkum, Kieselsäure, Aluminiumhydroxid, Calciumsilikat und Polyamid-Pulver oder Gemische dieser Stoffe. Sprays können zusätzlich die üblichen Treibmittel, wie z.B. Chlorfluorkohlenwasserstoffe, Propan/Butan oder Dimethylether, enthalten.

Lösungen und Emulsionen können die üblichen Trägerstoffe wie z.B. Lösemittel, Lösungsvermittler und Emulgatoren, z.B. Wasser, Ethanol, Isopropanol, Ethylcarbonat, Ethlyacetat, Benzylalkohol, Benzylbenzoat, Propylenglykol, 1,3-Butylglykol, Öle, insbesondere Triglyceride, Fettalkohole, Baumwollsaatöl, Erdnussöl, Maiskeimöl, Olivenöl, Rizinusöl und Sesamöl, Glycerinfettsäureester, Polyethylenglykole und Fettsäureester des Sorbitans oder Gemische dieser Stoffe enthalten. Suspensionen, weiterhin auch Emulisonen und Lösungen, können die üblichen Trägerstoffe wie flüssige Verdünnungsmittel, z.B. Wasser, Ethanol oder Propylenglykol, Suspendiermittel, z.B. ethoxylierte Isostearylalkohole, Polyoxyethylensorbitester und Polyoxyethylensorbitanester, mikrokristalline Cellulose, Hydroxyethlycellulose, Aluminiummetahydroxid, Bentonit, Hectorit, Agar-Agar und Traganth oder Gemische dieser Stoffe enthalten.

Tensidhaltige Reinigungsprodukte können die üblichen Aktivsubstanzen wie Salze von Fettalkoholsulfaten, Fettalkoholethersulfaten, Sulfobernsteinsäurehalbestern, Fettsäureeiweißhydrolysaten, Isothionate, Imidazoliniumderivate, Methyltaurate, Sarkosinate, Saccharoseester, Alkylpolyglykoside, Fettsäuretauride, Fettsäureglutamate, Phosphorsäureester, Fettsäureamidethersulfate, Alkylamidobetaine, Fettalkohole, Fettsäureglyceride, Fettsäurediethanolamide und außerdem pflanzliche und synthetische Öle, Lanolinderivate, ethoxylierte Glycerinfettsäureester oder Gemische dieser Stoffe enthalten.

Gesichts- und Körperöle können die üblichen Trägerstoffe wie synthetische Öle wie z.B. Fettsäureester, Fettalkohole, Silikonöle, natürliche Öle wie Pflanzenöle und ölige Pflanzenauszüge, Paraffinöle, Lanolinöle oder Gemische dieser Stoffe enthalten. Und darüber hinaus Stabilisatoren, wie z.B. z.B. ethoxylierte Isostearylalkohole, Polyoxyethylensorbitester und Polyoxyethylensorbitanester, mikrokristalline Cellulose, Hydroxyethlycellulose, Aluminiummetahydroxid, Bentonit, Hectorit, Agar-Agar und Traganth oder Gemische dieser Stoffe enthalten.

Die kosmetischen Zubereitungen können in verschiedenen Formen vorliegen. So können sie z. B. eine Lösung, eine Emulsion oder Mikroemulsion vom Typ Wasser-in-Öl (W/O) oder vom Typ Öl-in-Wasser (O/W), eine multiple Emulsion, beispielsweise vom Typ Waser-in-Öl-in-Wasser (W/O/W), ein Gel, eine Salbe oder auch ein Aerosol darstellen. Es ist auch vorteilhaft, Ectoine in verkapselter Form darzureichen, z. B. in Kollagenmatrices und anderen üblichen Verkapselungsmaterialien, z. B. als Celluloseverkapselungen, in Gelatine, Wachsmatrices oder liposomal verkapselt. Insbesondere Wachsmatrices wie sie in der DE-OS 43 08 282 beschrieben werden, haben sich als günstig herausgestellt. Bevorzugt werden Emulsionen. O/W-Emulsionen werden besonders bevorzugt. Emulsionen, W/O-Emulsionen und O/W-Emulsionen sind in üblicher Weise erhältlich.

Ist eine Zubereitung als Aerosol konfektioniert, verwendet man in der Regel die üblichen Treibmittel, wie Alkane, Fluoralkane und Chlorfluoralkane.

Die kosmetische Zubereitung kann auch zum Schutz der Haare gegen photochemische Schäden verwendet werden, um Veränderungen von Farbnuancen, ein Entfärben oder Schäden mechanischer Art zu verhindern. In diesem Fall erfolgt geeignet eine Konfektionierung als Shampoo, Lotion, Gel oder Emulsion zum Ausspülen, wobei die jeweilige Zubereitung vor oder nach dem Shamponieren, vor oder nach dem Färben oder Entfärben bzw. vor oder nach der Dauerwelle aufgetragen wird. Es kann auch eine Zubereitung als Lotion oder Gel zum Frisieren und Behandeln, als Lotion oder Gel zum Bürsten oder Legen einer Wasserwelle, als Haarlack, Dauerwellenmittel, Färbe- oder Entfärbemittel der Haare gewählt werden. Die Zubereitung mit Lichtschutzeigenschaften kann Adjuvantien enthalten, wie Grenzflächen aktive Mittel, Verdickungsmittel, Polymere, weichmachende Mittel, Konservierungsmittel, Schaumstabilisatoren, Elektrolyte, organische Lösungsmittel, Silikonderivate, Öle, Wachse, Antifettmittel, Farbstoffe und/oder Pigmente, die das Mittel selbst oder die Haare färben oder andere für die Haarpflege üblicherweise verwendete Ingredienzien.

Gegenstand der Erfindung ist somit auch die Verwendung der erfindungsgemäßen verkapselten Pigmente in wäßrigen Formulierungen, wie Farben, Druckfarben, Sicherheitsdruckfarben, Beschichtungsmassen, Lacken, wie z.B. Industrie- und Automobillacken, in Kunststoffen sowie in der Kosmetik.

Die nachfolgenden Beispiele sollen die Erfindung näher erläutern, ohne sie jedoch zu beschränken.

### Beispiele

### Beispiel 1

### 1.1 Herstellung der Granulierlösung

In einem 2000 ml Doppelmantelgefäß werden 800,0 g VE-Wasser bei Raumtemperatur vorgelegt. Danach werden 200 g Mowiol 6-88-Granulierharz (Polyvinylalkohol, vollhydrolysiert, Fa. Kuraray) mittels eines 4-Flügelrührers bei 300 U/min, eingetragen. Anschließend wird der Doppelmantel mit Heißdampf auf 90-95 °C aufgeheizt und so lange gerührt bis sich das Granulierharz vollständig gelöst hat. Zuletzt wird der Heißdampf abgeschaltet und die Granulierharzlösung unter Rühren bis zum Abkühlen auf 30-40 C weitergerührt.

### 1.2 Herstellung des verkapselten Pigmentes

Zur Herstellung der verkapselten Pigmente ist eine gute Durchmischung zu gewährleisten. Die Mischung wird im 1 kg-Maßstab mit Hilfe eines Eirich R02 Mischers hergestellt. Hierzu werden 666,7 g Iriodin^{®} 100 (TiO₂/Glimmerpigment der Teilchengröße 10-60 µm, Fa. Merck KGaA) im Mischerbehälter vorgelegt und langsam werden 85,3 g Granulierlösung aus Beispiel 1.1 zugegeben. Anschließend werden noch 248 g VE-Wasser zugesetzt und die Mischung homogenisiert. Mit einem Teigschaber wird nun die Gefäßwandung, der Gefäßboden und Abstreifer von Verklebungen und Verpackungen befreit und anschließend weitere 1-5 Min gemischt. Die fertige Granulatmischung sollte von größeren Aggregaten frei sein und eine streuselteigartige Konsistenz besitzen.

### 1.3 Pelletierung des verkapselten Pigmentes

Um die groben und unförmigen verkapselten Pigmente in trockener Form als fließfähige und abriebarme Pellets zu erhalten, wird das feuchte Material, auf einem Eirich Pelletierteller TR 04 pelletiert. Dort wird auch die Größenverteilung eingestellt.

Hierzu werden 200 g frisch hergestelltes Granulat auf den Teller gegeben und bei 200-350 U/min und einem Neigungswinkel von 30-40° die Sollkorngröße eingestellt und hierbei werden Portionen zwischen 50-100 g eingetragen, welche innerhalb kurzer Zeit zugegeben werden können.

Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben.

### 1.4 Trocknung der Pellets

Die Trocknung der Pellets erfolgt in einem Wirbelschichttrockner der Firma Aeromatic Fielder, Typ STREA. Die Trocknungszeit für 1,7 kg feuchtes Material liegt bei 90-120 min. Die Trocknung beginnt, wenn kein Wasser an der oberen Gefäßwandung mehr kondensiert / Zuluft → 110 °C (Abluft ca. 35-45 °C). Anschließend erfolgt die vollständige Trocknung bei einer Zuluft von 100-110 °C (Abluft 90-100 °C). Je nach Pelletgröße und Feuchtigkeit muss die Zuluftstärke geregelt werden. Die feuchte granulierte Mischung wird auf eine Restfeuchte von mindestens 3 Gew.% eingestellt.

### 1.5 Fraktionierung der getrockneten Pellets

Um Grobkorn und Feingut vom Gutkorn zu trennen, werden die getrockneten und abgekühlten Pellets erst über ein grobes Sieb gegeben (obere Teilchengrenze, hier 1,6 mm) und anschließend der Staub- und Feinanteil über ein feines Sieb (untere Teilchengrenze, hier 0,4 mm) abgetrennt. Die Ausbeute wird in Massenprozent (in Bezug zur Einsatzmenge) angegeben.

Das verkapselten Pigmente in Form von kleinen Kugeln (Granulaten) sind abriebfest, formstabil und verträglich sowie gut löslich in dem wässrigen Offset-Überdrucklack 350081 der Weilburger Lackfabrik.

### 1.6 Auflösegeschwindigkeit

10 g der getrockneten und klassierten Granulate lösen sich unter Rühren in 90 g VE-Wasser bei 300 U/min in < 60 sec auf.

### Beispiel 2

### 2.1 Herstellung der Granulierlösung

In einem 200 ml-Doppelmantelgefäß werden 800,0 g VE-Wasser bei Raumtemperatur vorgelegt. Danach werden 200 g Mowiol 4-88-Granulierharz (Polyvinylalkohol, teilhydrolysiert, Fa. Kuraray) bei 300 U/min mittels eines 4-Flügelrührers eingetragen. Anschließend wird der Doppelmantel mit Heißdampf auf 90-95 °C aufgeheizt und so lange gerührt bis sich das Granulierharz vollständig gelöst hat.

Zuletzt wird der Heißdampf abgeschaltet und die Granulierharzlösung unter Rühren bis zum Abkühlen auf 30-40 °C mit 300-400 U/min weitergerührt.

### 2.2 Herstellung des verkapselten Pigmentes

Zur Herstellung der verkapselten Pigmente ist eine gute Durchmischung zu gewährleisten. Die Mischung wird im 1 kg-Maßstab mit Hilfe eines Eirich R02 Mischers hergestellt. Hierzu werden 614,3 g Chromaflair^{®} Silver/Green 060 (Effektpigment der Fa. Flex) im Mischerbehälter vorgelegt und langsam 85,3 g Granulierlösung aus Beispiel 2.1 zugegeben. Anschließend werden noch 275 g VE-Wasser zugesetzt und die Mischung homogenisiert. Mit einem Teigschaber wird nun die Gefäßwandung, der Gefäßboden und Abstreifer von Verklebungen und Verpackungen befreit und anschließend weitere 1-5 min gemischt. Die fertige Granulatmischung sollte von größeren Aggregaten frei sein und eine streuselteigartige Konsistenz besitzen.

### 2.3 Pelletierung des verkapselten Pigmentes

Um die groben und unförmigen verkapselten Pigmente in trockener Form als fließfähige und abriebarme Pellets zu erhalten, wird das feuchte Material auf einem Eirich Pelletierteller TR 04 pelletiert. Dort wird auch die Größenverteilung eingestellt.

Hierzu werden 200 g frisch hergestelltes Granulat auf den Teller gegeben und bei 200-350 U/min und einem Neigungswinkel von 30-40° die Sollkorngröße eingestellt. Ist die Sollkorngröße eingestellt, wird mit dem portionsweisen Eintrag des verkapselten Pigmentes begonnen.

Hierbei werden Portionen zwischen 50-100 g eingetragen, welche innerhalb kurzer Zeit zugegeben werden können (1 kg ca. 10-15 min). Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben.

### 2.4 Trocknung der Pellets

Die Trocknung der Pellets erfolgt in einem Wirbelschichttrockner der Firma Aeromatic Fielder, Typ STREA.

Die Trocknungszeit für 1,7 kg feuchtes Material liegt bei 90-120 min. Die Trocknung beginnt, wenn kein Wasser an der oberen Gefäßwandung mehr kondensiert / Zuluft → 110 °C (Abluft ca. 35-45 °C). Anschließend erfolgt die vollständige Trocknung bei einer Zuluft von 100-110 °C (Abluft 90-100 °C). Je nach Pelletgröße und Feuchtigkeit muss die Zuluftstärke geregelt werden. Die feuchte granulierte Mischung wird auf eine Restfeuchte von mindestens 3 Gew.% eingestellt.

### 2.5 Fraktionierung der getrockneten Pellets

Um Grobkorn und Feingut vom Gutkorn zu trennen, werden die getrockneten und abgekühlten Pellets erst über ein grobes Sieb gegeben (obere Teilchengrenze, hier 1,6 mm) und anschließend der Staub und Feinanteil über ein feines Sieb (untere Teilchengrenze, hier 0,4 mm) abgetrennt. Die Ausbeute wird in Massenprozent (in Bezug zur Einsatzmenge) angegeben.

Das erhaltene Granulat ist abriebfest, formstabil und verträglich sowie gut löslich in dem wässrigen Offset-Überdrucklack 350081 der Weilburger Lackfabrik.

### 2.6 Auflösegeschwindigkeit

10 g der getrockneten und klassierten Granulate lösen sich unter Rühren in 90 g VE-Wasser bei 300 U/min in < 60 sec auf.

### Beispiel 3

### 3.1 Herstellung des verkapselten Pigmentes

Zur Herstellung der verkapselten Pigmente ist eine gute Durchmischung zu gewährleisten. Die Mischung wird im 1 kg-Maßstab mit Hilfe eines Eirich R02 Mischers hergestellt. 500 g Eusolex T-2000 (UV-Filter der Fa. Merck, Darmstadt) werden im Mischerbehälter vorgelegt und langsam werden 21 g Granulierlösung aus Beispiel 2.1 zugegeben. Separat werden 90 g Polyethylenglykol 2000 (Fa. Merck) unter Rühren in 240 g VE-Wasser gelöst und der Eusolex-Lösung zugesetzt und die Mischung homogenisiert. Mit einem Teigschaber wird nun die Gefäßwandung, der Gefäßboden und Abstreifer von Verklebungen und Verpackungen befreit und anschließend weitere 1-5 min gemischt. Die fertige Granulatmischung sollte von größeren Aggregaten frei sein und eine streuselteigartige Konsistenz besitzen.

### 3.2 Pelletierung des verkapselten Pigmentes

Um die groben und unförmigen verkapselten Pigmente in trockener Form als fließfähige und abriebarme Pellets zu erhalten, wird das feuchte Material auf einem Eirich Pelletierteller TR 04 pelletiert. Dort wird auch die Größenverteilung eingestellt.

Hierzu werden 200 g frisch hergestelltes Granulat auf den Teller gegeben und bei 200-350 U/min und einem Neigungswinkel von 30-40° die Sollkorngröße eingestellt. Ist die Sollkorngröße eingestellt, wird mit dem portionsweisen Eintrag des verkapselten Pigmentes begonnen.

Hierbei werden Portionen zwischen 50-100 g eingetragen, welche innerhalb kurzer Zeit zugegeben werden können (1 kg ca. 10-15 min). Gröbere Aggregate sammeln sich in der Mitte der beim Pelletieren entstehenden "Materialfluß-Niere". Diese werden mit einer kleinen Schaufel aufgenommen, von Hand zerkleinert und wieder zugegeben.

### 3.3 Trocknung der Pellets

Die Trocknung der Pellets erfolgt in einem Wirbelschichttrockner der Firma Aeromatic Fielder, Typ STREA.

Die Trocknungszeit für 1,7 kg feuchtes Material liegt bei 90-120 min. Die Trocknung beginnt, wenn kein Wasser an der oberen Gefäßwandung mehr kondensiert / Zuluft → 110 °C (Abluft ca. 35-45 °C). Anschließend erfolgt die vollständige Trocknung bei einer Zuluft von 100-110 °C (Abluft 90-100 °C). Je nach Pelletgröße und Feuchtigkeit muss die Zuluftstärke geregelt werden. Die feuchte granulierte Mischung wird auf eine Restfeuchte von mindestens 3 Gew.% eingestellt.

### 3.4 Fraktionierung der getrockneten Pellets

Um Grobkorn und Feingut vom Gutkorn zu trennen, werden die getrockneten und abgekühlten Pellets erst über ein grobes Sieb gegeben (obere Teilchengrenze, hier 1,6 mm) und anschließend der Staub und Feinanteil über ein feines Sieb (untere Teilchengrenze, hier 0,4 mm) abgetrennt. Die Ausbeute wird in Massenprozent (in Bezug zur Einsatzmenge) angegeben.

Das erhaltene Granulat ist abriebfest, formstabil und verträglich sowie gut löslich in dem wässrigen Offset-Überdrucklack 350081 der Weilburger Lackfabrik.

### 3.5 Auflösegeschwindigkeit

10 g der getrockneten und klassierten Granulate lösen sich unter Rühren in 90 g VE-Wasser bei 300 U/min in < 60 sec auf.

### Beispiel 4

Analog Beispiel 1 werden 614,3 g Timiron^{®} Starluster MP-115 (TiO₂/Glimmerpigment der Teilchengröße 10 - 60 µm. Fa. Merck KGaA) verkapselt.

### Beispiel 5

Analog Beispiel 1 werden 614,3 g Xirona^{®} Caribbean Blue (TiO₂/SiO₂/TiO₂-Mehrschichtpigment auf Glimmer der Teilchengröße 10 - 60 µm, Fa. Merck KGaA) verkapselt.

### Beispiel 6

Analog Beispiel 1 werden 614,3 g Timiron^{®} SuperRed (TiO₂/Glimmerpigment der Teilchengröße 10 - 60 µm, Fa. Merck KGaA) verkapselt.

### Beispiel 7

Analog Beispiel 1 werden 614,3 g Xirona^{®} Indian Summer (Fe₂O₃/Siliziumdioxidplättchen der Teilchengröße 5 - 40 µm, Fa. Merck KGaA) verkapselt.

### Beispiel 8

Analog Beispiel 1 werden 614,3 g Xirona^{®} Magic Mauve (TiO₂/Siliziumdioxidplättchen der Teilchengröße 5 - 40 µm. Fa. Merck KGaA) verkapselt.

### Beispiel 9

Analog Beispiel 1 werden 614,3 g Timiron^{®} Splendid Gold (TiO₂/SiO₂/TiO₂-Mehrschichtpigment auf Glimmer der Teilchengröße 10-60 µm, Fa. Merck KGaA) verkapselt.

### Beispiel 10

Analog Beispiel 1 werden 614,3 g Ronastar™ Noble Sparks (mit SiO₂ und TiO₂ beschichtete Glasplättchen der Teilchengröße 20 - 200 µm, Fa. Merck KGaA) verkapselt.

### Beispiel 11

Analog Beispiel 1 werden 614,3 g Xirona^{®} Kiwi Rose (mit TiO₂ beschichtete SiO₂-Plättchen der Teilchengröße 5-50 µm. Fa. Merck KGaA) verkapselt.

### Anwendungsbeispiele

### Beispiel A1: Shimmering Foundation

### Rohstoff:

### Phase A

| | | **INCI** | **[%]** |
|---|---|---|---|
| Extender W | (1) | MICA, CI 77891 (TITANIUM DIOXIDE) | 9,00 |
| MICRONA® Malte Yellow | (1) | MICA, CI 77492 (IRON OXIDES) | 4,00 |
| MICRONA® Malte Red | (1) | CI 77491 (IRON OXIDES), MICA | 0,40 |
| MICRONA® Malte black | (1) | CI 77499 (IRON OXIDES, MICA | 0,30 |
| PEARLETS mit Timiron® | (1) | MICA, CI 77891 (TITANIUM DIOXIDE), PVA | 4,50 |
| Starluster MP-115 analog Beispiel 4 | (1) | SILICA | 5,00 |
| RONASPHERE® | (1) | | |

### Phase B

| | | **INCI** | **[%]** |
|---|---|---|---|
| Blanose 7 HF | (2) | CELLULOSE GUM | 0,20 |
| Veegum | (3) | MAGNESIUM ALUMINUM SILICATE | 1,00 |
| Texapon K 1296 | (4) | SODIUM LAURYL SULFATE | 0,60 |
| Triethanolamin reinst | (1) | TRIETHANOLAMINE | 0,50 |
| Titriplex III | (1) | DISODIUM EDTA | 0,25 |
| Methyl-4-hydroxybenzoat | (1) | METHYLPARABEN | 0,15 |
| 1,2-Propandiol | (1) | PROPYLENE GLYCOL | 10,90 |
| Wasser, demineralisiert | (1) | AQUA (WATER) | 42.95 |

### Phase C

| | | **INCI** | **[%]** |
|---|---|---|---|
| Isopropylmyristat | (4) | ISOPROPYL MYRISTATE | 8,00 |
| Paraffin dünnflüssig | (1) | PARAFFINUM LIQUIDUM (MINERAL OIL) | 3,60 |
| Crodamol SS | (5) | CETYL ESTERS | 2,60 |
| Monomuls 60-35 °C | (4) | HYDROGENATED PALM GLYCERIDES | 1,70 |
| Stearinsäure | (1) | STEARIC ACID | 1,50 |
| EUSOLEX^{®} 6300 | (1) | 4-METHYLBENZYLIDENE CAMPHOR | 1,30 |
| EUSOLEX^{®} 4360 | (1) | BENZOPHENONE-3 | 0,50 |
| RonaCare^{™} | (1) | TOCOPHERYL ACETATE | 0,50 |
| Tocopherolacetat | | | |
| Magnesiumstearat | (1) | MAGNESIUM STEARATE | 0,10 |
| Propyl-4-hydroxybenzoat | (1) | PROPYLPARABEN | 0,05 |

### Phase D

| | | **INCI** | **[%]** |
|---|---|---|---|
| Parfümöl 200 529 | (6) | PARFUM | 0,20 |
| Euxyl K 400 | (7) | PHENOXYETHANOL, METHYLDIBROMO GLUTARONITRILE | 0,20 |

### Herstellung:

Alle Bestandteile der Phase C bei ca. 75 °C aufschmelzen und rühren, bis alles geschmolzen ist. Das Wasser der Phase B kalt vorlegen, Blanose mit dem Turrax einhomogenisieren, Veegum einstreuen und erneut homogenisieren. Auf 75 °C erwärmen und unter Rühren die übrigen Bestandteile darin lösen. Inhaltsstoffe der Phase A einrühren. Bei 75 °C unter Rühren die Phase C zugeben und 2 min homogenisieren. Die Masse unter Rühren auf 40 °C abkühlen, Phase D zugeben. Unter Rühren auf Raumtemperatur weiter abkühlen und auf pH 6,9-6,5 einstellen (z. B. Citronensäurelösung).

### Bezugsquellen:

(1) Merck KGaA/Rona^{®}
(2) Aqualon GmbH
(3) Vanderbilt
(4) Cognis GmbH
(5) Croda GmbH
(6) Fragrance Resources
(7) Schülke & Mayr GmbH

### Beispiel A2: Tagescreme (O/W)

### Rohstoff:

### Phase A

| | | INCI | [%] |
|---|---|---|---|
| Pearlets mit Timiron^{®} SuperRed analog Beispiel 6 | (1) | MICA, CI 77891 (TITANIUM DIOXIDE), PVA | 3,00 |
| Veegum HV | (2) | MAGNESIUM ALUMINUM SILICATE | 1,00 |
| Karion F flüssig | (1) | SORBITOL | 3,00 |
| Water, demineralisiert | | AQUA (WATER8 | 58,44 |
| Methyl-4-hydroxybenzoat | (1) | METHYLPARABEN | 0,18 |

### Phase B

| | | **INCI** | **[%]** |
|---|---|---|---|
| Arlacel 165 VP | (3) | GLYCERYL STEARATE, PEG-100 STEARATE | 5,00 |
| Lanette O | (4) | CETEARYL ALCOHOL | 1,50 |
| Miglyol 812 | (1) | CAPRYLIC/CAPRIC TRIGLYCERIDE | 7,00 |
| Shea-butter fest | (5) | BUTYROSPERMUM PARKII | 2,00 |
| | | (SHEA BUTTER) | |
| Cetiol SN | (4) | CETEARYL ISONONANOATE | 7,00 |
| Eutanol G | (4) | OCTYLDODECANOL | 7,50 |
| Emulgade PL 68/50 | (4) | CETEARYL ALCOHOL, CETEARYL GLUCOSIDE | 2,00 |
| Propyl-4-hydroxybenzoate | (1) | PROPYLPARABEN | 0,08 |

### Phase C

| | | **INCI** | **[%]** |
|---|---|---|---|
| Fragance 200 530 | (6) | PARFUM | 0,20 |
| Euxyl K 400 | (7) | PHENOXYETHANOL, METHYLDIBROMO GLUTARONITRILE | 0,10 |
| Dow Corning 345 | (8) | CYCLOMETHICONE | 2,00 |
| Citronensäure Monohydrat | (1) | CITRIC ACID | 0,00 |

### Herstellung:

Veegum im Wasser der Phase A dispergieren, restliche Rohstoffe zugeben, auf 80 °C erhitzen. Phase B auf 80 °C erhitzen, unter Rühren zu Phase A geben und homogenisieren. Unter Rühren auf 40 °C abkühlen und Phase C zugeben. Auf Raumtemperatur abkühlen und pH 6,0 einstellen.

### Bezugsquellen:

(1) Merck KGaA/Rona^{®}
(2) Vanderbilt
(3) Uniqema
(4) Cognis GmbH
(5) H. Erhard Wagner GmbH
(6) Fragrance Resources GmbH
(7) Schülke & Mayr GmbH
(8) Dow Corning

### Beispiel A3: Duschgel

### Rohstoff:

### Phase A

| | | INCI | [%] |
|---|---|---|---|
| Pearlets mit Xirona^{®} Magic Mauve analog Beispiel 8 | (1) | SILICA, CI 77891 (TITANIUM DIOXIDE), PVA, TIN OXIDE | 0,10 |
| Keltrol SFT | (2) | XANTHAN GUM | 1,10 |
| Wasser, demineralisiert | | AQUA (WATER) | 64,70 |

### Phase B

| | | **INCI** | **[%]** |
|---|---|---|---|
| Plantacare 2000 UP | (3) | DECYL GLUCOSIDE | 20,00 |
| Texapon ASV 50 | (3) | SODIUM LAURETH SULFATE, SODIUM LAURETH-8 SULFATE, MAGNESIUM LAURETH SULFATE, MAGNESIUM LAURETH-8 SULFATE, SODIUM OLETH SULFATE, MAGNESIUM OLETH SULFATE | 3,60 |
| Bronidox L | (3) | PROPYLENE GLYCOL, 5-BROMO-5-NITRO-1,3-DIOXANE | 0,30 |
| Parfümöl Everest 200 524 Farbstofflösung | (4) | PARFUM | 0,05 |

### Phase C

| | | **INCI** | **[%]** |
|---|---|---|---|
| Citronensäure Monohydrat | (1) | CITRIC ACID | 0,15 |
| Wasser, demineralisiert | | AQUA (WATER) | 10,00 |

### Herstellung:

Für Phase A das Pigment in das Wasser einrühren. Keltrol SFT unter Rühren langsam einstreuen und rühren bis es gelöst ist. Die Phasen B und C nacheinander hinzufügen und dabei langsam rühren bis alles homogen verteilt ist. pH-Wert auf 6,0 bis 6,5 einstellen.

### Bezugsquellen:

(1) Merck KGaA/Rona^{®}
(2) C.P. Kelco
(3) Cognis GmbH
(4) Fragrance Resources

### Beispiel A4: Eyeliner Gel

### Rohstoff:

### Phase A

| | | **INCI** | **[%]** |
|---|---|---|---|
| Pearlets mit Xirona^{®} Caribbean Blue analog Beispiel 5 | (1) | SILICA, CI 77891 (TITANIUM DIOXIDE), MICA, PVA, TIN OXIDE | 15,00 |
| Mica Black | (1) | CI 77499 (IRON OXIDES), MICA, CI 77891 (TITANIUM) | 5,00 |
| RONASPHERE^{®} | (1) | SILICA | 2,00 |
| Carbopol ETD 2001 | (2) | CARBOMER | 0,40 |
| Citronensäure Monohydrat | (1) | CITRIC ACID | 0,00 |
| Waser, demineralisiert | | AQUA (WATER) | 60,00 |

### Phase B

| | | **INCI** | **[%]** |
|---|---|---|---|
| Glycerin, wasserfrei | (1) | GLYCERIN | 4,00 |
| Triethanolamin reinst | (1) | TRIETHANOLAMINE | 0,90 |
| Luviskol VA 64 Powder | (3) | PVP/VA COPOLYMER | 2,00 |
| Germaben II | (4) | PROPYLENE GLYCOL, DIAZOLIDINYL UREA, METHYLPARABEN, PROPYLPARABEN | 1,00 |
| Wasser, demineralisiert | | AQUA (WATER) | 9,70 |

### Herstellung:

Perlglanzpigmente und Ronasphere^{®} im Wasser der Phase A dispergieren. Mit einigen Tropfen Citronensäure ansäuern um die Viskosität zu vermindern. Carbopol unter Rühren einstreuen. Nach vollständiger Lösung die vorgelöste Phase B langsam einrühren und pH-Wert auf 7,0-7,5 einstellen.

### Bezugsquellen:

(1) Merck KGaA/Rona^{®}
(2) BF Goodrich
(3) BASF AG
(4) ISP Global Technologies

### Beispiel A5: Eye Shadow Gel

### Rohstoff:

### Phase A

| | | **INCI** | **[%]** |
|---|---|---|---|
| Pearlets mit Xirona^{®} Magic Mauve analog Beispiel 8 | (1) | SILICA, CI 77891 (TITANIUM DIOXIDE), PVA, TIN OXIDE | 10,00 |
| Xirona^{®} Indian Summer | (1) | SILICA, CI 77491 (IRON OXIDES) | 5,00 |
| Mica Black | (1) | CI 77499 (IRON OXIDES), MICA, CI 77891 (TITANIUM DIOXIDE) | 5,00 |
| RONASPHERE^{®} | (1) | SILICA | 3,00 |
| Carbopol ETD 2001 | (2) | CARBOMER | 0,30 |
| Citronensäure Monohydrat | (1) | CITRIC ACID | 0,00 |
| Wasser, demineralisiert | | AQUA (WATER) | 60,00 |

### Phase B

| | | **INCI** | **[%]** |
|---|---|---|---|
| Glycerin, wasserfrei | (1) | GLYCERIN | 2,00 |
| Germaben II | (3) | PROPYLENE GLYCOL, DIAZOLIDINYL UREA, METHYLPARABEN, PROPYLPARABEN | 0,20 |
| Triethanolamin reinst | (1) | TRIETHANOLAMINE | 0,70 |
| Wasser, demineralisiert | | AQUA (WATER) | 13,80 |

### Herstellung:

Perlglanzpigmente und Ronasphere^{®} im Wasser der Phase A dispergieren. Mit einigen Tropfen Citronensäure ansäuern um die Viskosität zu vermindern, Carbopol unter Rühren einstreuen. Nach vollständiger Lösung die vorgelöste Phase B langsam einrühren.

### Bezugsquellen:

(1) Merck KGaA
(2) BF Goodrich GmbH
(3) ISP Global Technologies

### Beispiel A6: Shampoo

### Rohstoff

### Phase A

| | | INCI | [%] |
|---|---|---|---|
| Pearlets mit Xirona^{®} Caribbean Blue analog Beispiel 5 | (1) | SILICA, CI 77891 (TITANIUM DIOXIDE), MICA, PVA, TIN OXIDE | 0,05 |
| Carbopol ETD 2020 | (2) | ACRYLATES/C10-30 ALKYL ACRYLATE CROSSPOLYMER | 0,90 |
| Wasser, demineralisiert | | AQUA (WATER) | 59,90 |

### Phase B

| | | **INCI** | **[%]** |
|---|---|---|---|
| Triethanolamin reinst | | TRIETHANOLAMINE | 0,90 |
| Wasser, demineralisiert | | AQUA (WATER) | 10,00 |
| | | | |

| Phase C | | | |
|---|---|---|---|
| | | **INCI** | [%] |
| Plantacare 2000 UP | (3) | DECYL GLUCOSIDE | 20,00 |
| Texapon ASV | (3) | MAGNESIUM OLETH SULFATE, SODIUM OLETH SULFATE, MAGNESIUM LAURETH-8 SULFATE, SODIUM LAURETH-8 SULFATE, MAGNESIUM LAURETH SULFATE, SODIUM LAURETH SULFATE | 8,00 |
| Bronidox L | (3) | PROPYLENE GLYCOL, 5-BROMO-5-NITRO-1,3-DIOXANE | 0,20 |
| Parfümöl Everest 79658 SB | (4) | PARFUM | 0,05 |

### Herstellung:

Für Phase A das Pigment in das Wasser einrühren. Mit einigen Tropfen Citronensäure (10%ig) ansäuern um die Viskosität zu vermindern und das Carbopol unter Rühren langsam einstreuen. Nach vollständiger Lösung langsam Phase B zugeben. Nacheinander werden nun die Bestandteile der Phase C zugegeben.

### Bezugsquellen:

(1) Merck KGaA
(2) BF Goodrich GmbH
(3) Cognis GmbH
(4) Haarmann & Reimer GmbH

### Beispiel A7: Sparkling Body Cream (O/W)

### Rohstoff

### Phase A

| | | **INCI** | **[%]** |
|---|---|---|---|
| Pearlets mit Timiron^{®} Splendid Gold analog | (1) | CI 77891 (TITANIUM DIOXIDE), MICA, SILICA, PVA | 3,00 |
| Beispiel 9 | | | |
| Carbopol ETD 2001 | (2) | CARBOMER | 0,60 |
| Citronensäure Monohydrat | (1) | CITRIC ACID | 0,00 |
| Wasser, demineralisiert | | AQUA (WATER) | 40,00 |

### Phase B

| | | **INCI** | **[%]** |
|---|---|---|---|
| RonaCare^{™} Allantoin | (1) | ALLANTOIN | 0,20 |
| 1,2-Propandiol | (1) | PROPYLENE GLYCOL | 3,00 |
| Euxyl K 400 | (3) | PHENOXYETHANOL, METHYLDIBROMO GLUTARONITRILE | 0,10 |
| Chemag 2000 | (4) | IMIDAZOLINYL UREA | 0,30 |
| Methyl-4-hydroxybenzoat | (1) | METHYLPARABEN | 0,15 |
| Wasser, demineralisiert | | AQUA (WATER) | 27,65 |

### Phase C

| | | **INCI** | **[%]** |
|---|---|---|---|
| Hostaphat KL 340 N | (5) | DILAURETH-4 PHOSPHATE | 3,00 |
| Cetylalkohol | (1) | CETYL ALCOHOL | 2,00 |
| Parafin flüssig | (1) | PARAFFINUM LIQUIDUM (MINERAL OIL) | 10,00 |
| Cetiol V | (6) | DECYL OLEATE | 6,00 |
| Propyl-4-hydroxybenzoat | (1) | PROPYLPARABEN | 0,05 |

### Phase D

| | | **INCI** | **[%]** |
|---|---|---|---|
| Triethanolamin | (1) | TRIETHANOLAMINE | 0,35 |
| Wasser, demineralisiert | | AQUA (WATER) | 3,50 |
| | | | |

| Phase E | | | |
|---|---|---|---|
| | | **INCI** | **[%]** |
| Parfümöl 72979 | (7) | PARFUM | 0,10 |

### Herstellung:

Das Perlglanzpigment im Wasser der Phase A dispergieren. Eventuell mit einigen Tropfen Citronensäure ansäuern, um die Viskosität zu vermindern. Carbopol unter Rühren einstreuen. Nach vollständiger Lösung die vorgelöste Phase B langsam einrühren. Phase A/B und Phase C auf 80 °C erhitzen, Phase C in Phase A/B einrühren, homogenisieren mit Phase D neutralisieren, nochmals homogenisieren und unter Rühren abkühlen. Bei 40 °C Parfümöl zugeben, unter Rühren auf Raumtemperatur abkühlen.

### Bezugsquellen:

(1) Merck KGaA
(2) BF Goodrich GmbH
(3) Schülke & Mayr GmbH
(4) Chemag AG
(5) Clariant GmbH
(6) Cognis GmbH
(7) Haarmann & Reimer GmbH

### Beispiel A8: Duschgel

### Rohstoff

### Phase A

| | | **INCI** | **[%]** |
|---|---|---|---|
| Pearlets mit Ronastar^{™} Noble | (1) | CALCIUM ALUMINUM | 0,05 |
| Sparks analog Beispiel 10 | | BOROSILICATE, SILICA, TITANIUM DIOXIDE, TIN OXIDE | |
| Keltrol CG-SFT | (2) | XANTHAN GUM | 1,10 |
| Wasser, demineralisiert | | AQUA (WATER) | 64,07 |

### Phase B

| | | **INCI** | **[%]** |
|---|---|---|---|
| Plantacare 2000 UP | (3) | DECYL GLUCOSIDE | 20,00 |
| Texapon ASV 50 | (3) | SODIUM LAURETH SULFATE, SODIUM LAURETH-8 (SULFATE, MAGNESIUM LAURETH SULFATE, MAGNESIUM LAURETH-8 SULFATE, SODIUM OLETH SULFATE, MAGNESIUM OLETH SULFATE | 3,60 |
| Bronidox L | (3) | PROPYLENE GLYCOL, 5-BROMO-5-NITRO-1,3-DIOXANE | 0,30 |
| Frag 280851 Fruit Cocktail | (4) | PARFUM | 0,05 |
| 1 % Sicovit yellow orange 85 E 110 in water | (5) | AQUA (WATER), CI 15985 (FD&C YELLOW NO. 6) | 0,33 |
| 1 % Sicovit Chinolin yellow 70 E 104 in water | (5) | AQUA (WATER), CI 47005 (ACID YELLOW 3) | 0,35 |

### Phase C

| | | **INCI** | **[%]** |
|---|---|---|---|
| Citric acid monohydrate | (5) | DILAURETH-4 PHOSPHATE | 0,15 |
| Water, demineralized | (1) | AQUA (WATER) | 10,00 |

### Herstellung:

Das Perlglanzpigment in Wasser der Phase A dispergieren. Unter langsamen Rühren Keltrol CG-SFT zugeben und rühren, bis sich alles gelöst hat (nicht homogenisieren). Die Komponenten der Phase B zu der Phase A zugeben. Zitronensäure in Wasser der Phase C lösen und zu der Phase A/B zugeben. Unter Rühren homogenisieren (Einbringen von Luft vermeiden). Den pH-Wert auf 6,0-6,5 mit Zitronensäure einstellen, sofern notwendig.

### Bezugsquellen:

(1) Merck KGaA / Rona^{®}
(2) C. P. Kelco
(3) Cognis GmbH
(4) Drom
(5) BASF AG

### Beispiel A9: Bar Soap

### Rohstoff

### Phase A

| | | INCI | [%] |
|---|---|---|---|
| Pearlets mit Xirona^{®} Kiwi Rose analog Beispiel 11 | (1) | SILICA, CI 77891 (TITANIUM DIOXIDE), PVA | 1,00 |
| Colorona^{®} Glitter Bordeaux | (1) | MICA, CI 77941 (IRON OXIDES) | 0,33 |

### Phase B

| | | **INCI** | **[%]** |
|---|---|---|---|
| Translucent soap base | (2) | SODIUM PALMATE, SODIUM LAUTETH SULFATE, SODIUM SEARATE, SODIUM MYRISTATE, SODIUM COCOYL ISETHIONATE, TRIETHANOLAMINE, AQUA (WATER), GLYCERIN, SORBITOL, PROPYLENE GLYCOL, FRAGANCE | 98,67 |

### Herstellung:

Phase B wird in einem Seifenextruder durch ein passendes Sieb verfeinert und extrudiert. Dann wird die Masse zu Pellets verarbeitet. Anschließend wird Phase A dazugegeben und homogen mit Phase B vermischt. Die Seifenmasse wird erneut extrudiert und zu Seifen geformt.

### Bezugsquellen:

(1) Merck KGaA / Rona^{®}
(2) Jean Charles

### Beispiel A10: Sonnencreme W/O

### Rohstoff

### Phase A

| | | **INCI** | **[%]** |
|---|---|---|---|
| Eusolex^{®} TS | (1) | TITANIUM DIOXIDE, ALUMINA, STEARIC ACID | 10,00 |
| Arlacel P135 | (2) | PEG-30 DIPOLYHYDROXYSTEARATE | 2,00 |
| ISO WO5 | (3) | PARAFIN | 2,50 |
| Myritol 318 | (4) | CAPRYLIC/CAPRIC TRIGLYCERIDES | 6,00 |
| Arlamol DOA | (2) | DIETHYLHEXYL ADIPATE | 6,00 |
| Arlamol E | (2) | PPG-15 STEARYLETHER | 0,70 |
| DC 345 | (5) | CYCLOMETHICONE | 1,40 |
| Shea Butter | (6) | SHEA BUTTER | 1,00 |
| Isononyle Isononanoate | (6) | ISONONYLE ISONONANOATE | 9,00 |
| Zinc Stearate | (6) | ZINC STEARATE | 0,70 |
| RonaCare™ Tocopheryl Acetate | (1) | TOCOPHERYL ACETATE | 0,50 |
| Bentone Gel TN | (7) | C₁₂₋₁₅ ALCOHOL BENZOATE, STEARALKONIUM HECTORITE, PROPYLENE CARBONATE | 7,00 |

### Phase B

| | | **INCI** | **[%]** |
|---|---|---|---|
| Wasser, demineralisiert | | | qsp 100 |
| Mageniumsulfat | (1) | MAGNESIUM SULFATE | 0,70 |
| Titriplex III | (1) | DISODIUM EDTA | 0,05 |
| Glycerin | | GLYCERIN | 3,00 |

### Phase C

| | | **INCI** | **[%]** |
|---|---|---|---|
| Eusolex^{®} UV-Pearls™ OMC | (5) | AQUA, ETHYLHEXYLMETHOXY CINNAMATE, SILICA, CHLORPHENESIN, BHT | 20,00 |

### Phase D

| | | **INCI** | **[%]** |
|---|---|---|---|
| Pearlets mit Xirona^{®} Caribbean Blue analog Beispiel 5 | (1) | SILICA, CI 77891 (TITANIUM DIOXIDE), MICA, PVA, TIN OXIDE | 0,20 |

### Herstellung:

Phasen A und B auf 75 °C erwärmen. Langsam Phase B in Phase A einrühren und intensiv rühren. Homogenisieren. Während des Rührens abkühlen lassen. Phase C bei 40 °C unter Rühren zugeben. Phase D dispergieren.

### Bezugsquellen:

(1) Merck KGaA / Rona^{®}
(2) Quimasso
(3) Aiglon
(4) Cognis
(5) Dow Corning
(6) Laserson
(7) Rheox

### Beispiel A11: After Sun Body Lotion

### Rohstoff

### Phase A

| | | **INCI** | **[%]** |
|---|---|---|---|
| Arlamol HD | (2) | ISOHEXADECANE | 6,30 |
| Brij 72 | (2) | STEARETH-2 | 0,70 |
| Brij 721 | (2) | STEARETH-21 | 3,90 |
| DC 200 | (5) | DIMETHICONE | 4,00 |
| Emulgade PL 68-50 | (4) | CETEARYL GLUCOSIDE, CETEARYL ALCOHOL | 0,25 |
| Cetiol SN | (4) | CETEARYL ISONONANOATE | 3,00 |
| Cetiol MM | (4) | MYRISTYL MYRISTATE | 1,50 |
| RonaCare™ Tocopheryl | (1) | TOCOPHERYL ACETATE | 0,50 |
| Acetate | | | |
| Finsolv TN | (3) | C₁₂-₁₅ ALCOHOL BENZOATE | 3,00 |
| RonaCare™ Ectoin | (1) | ECTOIN | 1,00 |
| RonaCare™ Bisabolol | (1) | BISABOLOL | 0,50 |

### Phase B

| | | **INCI** | **[%]** |
|---|---|---|---|
| Wasser, demineralisiert | | | qsp 100 |
| Carbopol Ultrez 10 | (1) | CARBOMER | 0,25 |
| Glycerin | | GLYCERIN | 2,00 |

### Phase C

| | | **INCI** | **[%]** |
|---|---|---|---|
| Pearlets mit Xirona^{®} Caribbean Blue analog Beispiel 5 | (1) | SILICA, CI 77891 (TITANIUM DIOXIDE), MICA, PVA, TIN OXIDE | 1,00 |

### Herstellung:

Phasen A und B auf 75 °C erwärmen. Langsam Phase B in Phase A einrühren und intensiv rühren. Homogenisieren. Während des Rührens abkühlen lassen. Phase C bei 40 °C unter langsamen Rühren zugeben. Auf pH=5 neutralisieren.

### Bezugsquellen:

(1) Merck KGaA / Rona^{®}
(2) Quimasso
(3) Finetex
(4) Cognis
(5) Dow Corning

### Beispiel A12: Druck

Herstellung einer Papierbeschichtung auf einer Leimpresse

| Rezeptur | |
|---|---|
| Carboxymethylcellulose (kaltwasserlöslich; 2%ige wäßrige Lösung ergibt eine Brookfield-Viskosität von 30 mPas) | 40 g/l |
| Anionische Copolymerdispersion auf Basis n-Butylacrylat, Acrylnitril und Styrol; FK: 50 %; pH: 8-9; MFT (Mindestfilmbildetemperatur nach DIN 53787: < 1 °C) | 200 g/l |
| Entschäumer auf Basis Phosphorsäure-Alkohol-Gemisch | 2 g/l |
| Pigment-Granulat aus Beispiel 2 | 50 g/l |
| Modifiziertes Melamin-Formaldehyd-Harz (Fk: 40 %; pH: ca. 9; lonogenität: anionisch) | 25 g/l |
| VE-Wasser zur Einstellung der Verarbeitungsviskosität | Nach Bedarf |

### Auftragsgewicht: 450 l/t Fertig-Papier

### Verarbeitungsviskosität: 150-350 mPas (Brookfield 100 Upm)

### Beispiel A13: Kunststoff

Zu 1 kg bioabbaubares Granulat auf Basis Milchsäure (Hersteller: Fa. Stepah BV, Niederlande; Dichte: 1,25 g/cm³; Zugfestigkeit (kpsi: 6-15; Schmelzpunkt: > 145 °C) werden in einem Taumelmischer 40 g Granulat aus Beispiel 2 zugegegeben und 2 min. lang gemischt. Dieses Granulat wird auf einer Spritzgußmaschine unter den üblichen Bedingungen zu Stufenplättchen mit den Maßen 4 x 3 x 0,5 cm verarbeitet.Die erhaltenen Plättchen zeichnen sich durch ausgeprägten Glanz aus.

### Beispiel A14: Lack

### Formulierung bestehend aus:

3,00 % Pigmentgranulat aus Beispiel 1
0,70 % Cromophtalblau A 3R (Ciba)
0,07 % Farbruß FW 200 (Fa. Degussa)
0,08 % Hostapermviolett RL Spezial (Fa. Clariant)
Rest: Wäßriger Basislack mit 17 % Festkörpergehalt(Acrylat/Melamin)) und VE-Wasser.

## Patentansprüche

1. Verkapselte Pigmente, **dadurch gekennzeichnet, dass** sie aus einer äußeren wasserlöslichen Hülle, einem Kern aus organischen und/oder anorganischen Pigmenten, und 1,5-7,5 Gew.% Lösemittel und optional üblichen Additiven bestehen, wobei die äußere Hülle ein Filmbildner ist und die Pigmente Effektpigmente sind, ausgewählt aus der Gruppe der Perlglanzpigmente, Glanzpigmente, Metalleffektpigmente, Mehrschichtpigmente, holographischen Pigmenten, beschichteten oder unbeschichteten BiOCI-Plättchen, LCP-Pigmente (Liquid Crystal Polymer), oder deren Gemische.

2. Verkapselte Pipmente nach Anspruch 1, **dadurch gekennzeichnet, dass** der Filmbildner aus wasserlöslichen Harzen bzw. Harzgemischen, Cellulose und Cellulosederivate, Zuckern, Sorbit, Stärken, Alginaten und/oder Chitosan besteht und gegebenenfalls übliche Additive enthält.

3. Verkapselte Pipmente nach Anspruch 1 oder 2, **dadurch gekennzeichnet, dass** es sich bei dem Filmbildner um Polyvinylalkohol (PVA) oder Polyvinylpyrrolidon (PVP) handelt.

4. Verkapselte Pigmente nach einem der Ansprüche 1 bis 3, **dadurch gekennzeichnet, dass** das Verhältnis Hülle/Kem 50 : 50 bis 0,5 : 99,5 beträgt.

5. Verkapselte Pigmente nach einem der Ansprüche 1 bis 4, **dadurch gekennzeichnet, dass** die Auflösegeschwindigkeit der Hülle in Abhängigkeit von der Zusammensetzung der Hülle und der Granulatgröße bei Raumtemperatur < 60 sec beträgt.

6. Verkapselte Pigmente nach einem der Ansprüche 1 bis 5, **dadurch gekennzeichnet, dass** die Perlglanzpigmente, Glanzpigmente und Mehrschichtpigmente auf natürlichen und/oder synthetische Glimmerplättchen, SiO₂-Plättchen, Fe₂O₃-Plättchen, Glasplättchen, TiO₂-Plättchen oder Al₂O₃-Plättchen basieren.

7. Verkapselte Pigmente nach einem der Ansprüche 1 bis 6, **dadurch gekennzeichnet, dass** das Perlglanzpigment ein mit TiO₂ und/oder Fe₂O₃ beschichtetes Glimmer-, Glas-, Al₂O₃ oder SiO₂-Plättchen ist.

8. Verkapselte Pigmente nach einem der Ansprüche 1 bis 7, **dadurch gekennzeichnet, dass** das Mehrschichtpigment eine TiO₂-SiO₂-TiO₂-Schichtenfolge aufweist.

9. Verkapselte Pigmente nach einem der Ansprüche 1 bis 8, **dadurch gekennzeichnet, dass** es sich bei den Additiven um Entschäumer, oberflächenaktive Substanzen, Netzmittel, Antiabsetzmittel, Konservierungsmittel, UV-Stabilisatoren, Verlaufsmittel, Neutralisationsmittel, Modifiziermittel, Sikkative und/oder Thioxotropiermittel handelt.

10. Verwendung der verkapselten Pigmente nach einem der Ansprüche 1 bis 9 in wäßrigen Formulierungen wie Farben, Lacke, Pulverlacke, Druckfarben, bei der Papierherstellung, im Papierstrich, in Sicherheitsdruckfarben, Kunststoffen, sowie in kosmetischen Formulierungen.

## Claims

1. Encapsulated pigments, **characterised in that** they consist of an outer water-soluble shell, a core comprising organic and/or inorganic pigments, and 1.5-7.5% by weight of solvents and optionally conventional additives, where the outer shell is a film former and the pigments are effect pigments selected from the group of the pearlescent pigments, lustre pigments, metal-effect pigments, multilayered pigments, holographic pigments, coated or uncoated BiOCl flakes and LCP (liquid crystal polymer) pigments, or mixtures thereof.

2. Encapsulated pigments according to Claim 1, **characterised in that** the film former consists of water-soluble resins or resin mixtures, cellulose and cellulose derivatives, sugars, sorbitol, starches, alginates and/or chitosan and optionally comprises conventional additives.

3. Encapsulated pigments according to Claim 1 or 2, **characterised in that** the film former is polyvinyl alcohol (PVA) or polyvinylpyrrolidone (PVP).

4. Encapsulated pigments according to one of Claims 1 to 3, **characterised in that** the shell/core ratio is 50 : 50 to 0.5 : 99.5.

5. Encapsulated pigments according to one of Claims 1 to 4, **characterised in that** the dissolution rate of the shell at room temperature is < 60 sec, depending on the composition of the shell and the granule size.

6. Encapsulated pigments according to one of Claims 1 to 5, **characterised in that** the pearlescent pigments, lustre pigments and multilayered pigments are based on natural and/or synthetic mica flakes, SiO₂ flakes, Fe₂O₃ flakes, glass flakes, TiO₂ flakes or Al₂O₃ flakes.

7. Encapsulated pigments according to one of Claims 1 to 6, **characterised in that** the pearlescent pigment is a TiO₂- and/or Fe₂O₃-coated mica, glass, Al₂O₃ or SiO₂ flake.

8. Encapsulated pigments according to one of Claims 1 to 7, **characterised in that** the multilayered pigment has a TiO₂-SiO₂-TiO₂ layer sequence.

9. Encapsulated pigments according to one of Claims 1 to 8, **characterised in that** the additives are antifoams, surface-active substances, wetting agents, antisettling agents, preservatives, UV stabilisers, flow-control agents, neutralisers, modifiers, siccatives and/or thixotropic agents.

10. Use of the encapsulated pigments according to one of Claims 1 to 9 in aqueous formulations, such as paints, coatings, powder coatings, printing inks, in papermaking, in paper coating, in security printing inks, plastics, and in cosmetic formulations.

## Revendications

1. Pigments encapsulés, **caractérisés en ce qu'**ils sont constitués d'une enveloppe hydrosoluble externe, d'un coeur comprenant des pigments organiques et/ou inorganiques, et 1,5-7,5% en poids de solvants et éventuellement des additifs classiques, où l'enveloppe externe est un agent filmogène et les pigments sont des pigments à effet choisis dans le groupe constitué par les pigments nacrés, les pigments à reflets lustrés, les pigments à effet métallique, les pigments multicouches, les pigments holographiques, les paillettes de BiOCl revêtues ou non revêtues et les pigments LCP (polymère à cristaux liquides), ou des mélanges de ceux-ci.

2. Pigments encapsulés selon la revendication 1, **caractérisés en ce que** l'agent filmogène est constitué de résines ou de mélanges de résines hydrosolubles, de cellulose et de dérivés de cellulose, de sucres, de sorbitol, d'amidons, d'alginates et/ou de chitosane et comprend éventuellement des additifs classiques.

3. Pigments encapsulés selon la revendication 1 ou 2, **caractérisés en ce que** l'agent filmogène est de l'alcool polyvinylique (PVA) ou de la polyvinylpyrrolidone (PVP).

4. Pigments encapsulés selon l'une des revendications 1 à 3, **caractérisés en ce que** le rapport enveloppe/coeur va de 50:50 à 0,5:99,5.

5. Pigments encapsulés selon l'une des revendications 1 à 4, **caractérisés en ce que** la vitesse de dissolution de l'enveloppe à température ambiante est < 60 sec, en fonction de la composition de l'enveloppe et de la taille des granulés.

6. Pigments encapsulés selon l'une des revendications 1 à 5, **caractérisés en ce que** les pigments nacrés, les pigments à effet lustré et les pigments multicouches sont à base de paillettes de mica naturel et/ou synthétique, de paillettes de SiO₂, de paillettes de Fe₂O₃, de paillettes de verre, de paillettes de TiO₂ ou de paillettes d'Al₂O₃.

7. Pigments encapsulés selon l'une des revendications 1 à 6, **caractérisés en ce que** le pigment nacré est une paillette d'Al₂O₃ ou SiO₂, de verre, de mica revêtue de TiO₂ et/ou de Fe₂O₃.

8. Pigments encapsulés selon l'une des revendications 1 à 7, **caractérisés en ce que** le pigment multicouches possède une séquence de couches TiO₂-SiO₂-TiO₂.

9. Pigments encapsulés selon l'une des revendications 1 à 8, **caractérisés en ce que** les additifs sont des agents antimousse, des agents tensioactifs, des agents mouillants, des agents stabilisants, des conservateurs, des agents anti-UV, des agents de contrôle de l'écoulement, des agents neutralisants, des correctifs, des siccatifs et/ou des agents thixotropes.

10. Utilisation des pigments encapsulés selon l'une des revendications 1 à 9, dans des formulations aqueuses, telles que les peintures, les revêtements, les revêtements en poudre, les encres d'impression, dans la fabrication du papier, dans le revêtement du papier, dans les encres d'impression de sécurité, dans les matières plastiques et dans les formulations cosmétiques.
